# EUROPÄISCHE PATENTSCHRIFT

(11) **EP 0 651 680 B1**
(45) Veröffentlichungstag und Bekanntmachung des Hinweises auf die Patenterteilung: **25.02.1998**
(21) Anmeldenummer: 93914565.2
(22) Anmeldetag: 08.07.1993
(51) Int. Cl.: B09B 1/00, B65F 1/14

(54) **DEPONIEANLAGE**
WASTE DISPOSAL FACILITY
INSTALLATION DE DEPOT DE DECHETS

(30) Priorität: 24.07.1992 AT 1515/92
(43) Veröffentlichungstag der Anmeldung: 10.05.1995
(73) Patentinhaber: ENTSORGUNGSTECHNIK, ABFALLBESEITIGUNGS- UND VERWERTUNGS-GESELLSCHAFT M.B.H., A-1040 Wien (AT); HÜBL, Friedrich, A-1040 Wien (AT)
(72) Erfinder: HÜBL, Friedrich, A-1040 Wien (AT)
(74) Vertreter: Weinzinger, Arnulf, Dipl.-Ing.
(86) Internationale Anmeldenummer: AT9300114
(87) Internationale Veröffentlichungsnummer: WO9402262

(56) Entgegenhaltungen:
- AT-B- 385 215
- AT-B- 387 344
- AT-B- 389 826
- CA-A- 1 137 894
- CH-A- 587 389
- NL-A- 7 410 801

## Beschreibung

Die Erfindung bezieht sich auf eine Deponieanlage gemäß dem Oberbegriff des Anspruches 1.

Die Erfindung betrifft auch einen Behälter für eine derartige Deponieanlage nach dem Oberbegriff des Anspruchs 24.

Es sind Deponieanlagen dieser Art aus AT-B-389 826 und aus CH-A 587 389 bekannt. Bei diesen bekannten Anlagen werden Abfälle in spezielle, meist aus Beton gefertigte Behälter gefüllt, und es wird eine Vielzahl solcher Behälter mehrschichtig aufeinander gestapelt angeordnet und diese Behälter werden dann mit Schüttmaterial überdeckt, wonach die Deckschicht, um diese zu befestigen und ihr ein freundliches Aussehen zu verleihen, bepflanzt wird. Um aus den Behältern bei einem allfälligen Undichtwerden derselben austretende, kontaminierend wirkende Substanzen, welche gegebenenfalls auch durch in die Deponie geratendes Wasser aus den dort deponierten Abfällen ausgewaschen werden können, zu erfassen, d.h. um das Undichtwerden von Behältern festzustellen und um nach Möglichkeit ein Austreten kontaminierender Substanzen aus der Deponieanlage hintanzuhalten, sind bei solchen bekannten Deponieanlagen zur Kontrolle zum Erkennen von Abflüssen Drainageeinrichtungen vorgesehen; hierzu ist auf einer dichten bzw. abgedichteten Bodenfläche, über welcher die Behälter gestapelt sind, eine flüssigkeitsdurchlässige Schicht mit Gefälle angeordnet, die zu einer Sammeleinrichtung, wie einem Sammelbecken, führt, aus dem Proben entnommen werden können und/oder welches mit Kontroll- bzw. Meßeinrichtungen ausgestattet ist. Es ist bei einer solchen Anlage ersichtlicherweise die Zuverlässigkeit der Überwachung nicht nur von einer ordnungsgemäßen Funktion der für die Untersuchung der Eluate eingesetzten Geräte, und von der Sorgfalt des mit dieser Untersuchung befaßten Personals, sondern auch von den Durchflußeigenschaften in der flüssigkeitsdurchlässigen Schicht, durch die allfällig aus den Behältern austretende Substanzen zum Sammelbecken fließen sollen, abhängig. So gesehen ist eine absolut sichere Kontrolle über das Austreten von Eluaten nicht möglich. Die ordnungsgemäße Funktion der Überwachungsgeräte verlangt eine ständige sorgfältige Pflege derselben, was einen entsprechenden Aufwand nach sich zieht; die Flüssigkeitsdurchlässigkeit der unter dem Stapel der Behälter befindlichen Schicht, welche aus den Behältern austretende Substanzen zum Sammelbecken leiten sollen, kann sich im Lauf der Zeit durch äußere Einflüsse in nachteiliger Weise vermindern, z.B. durch Feinmaterial, welches aus der die Behälter bedeckenden und umschließenden Schüttung in die Drainageschicht eingewandert ist, welcher Vorgang insbesondere durch in die Deponieanlage eindringendes Niederschlagswasser begünstigt wird. Weiter erfordert das Beheben von Undichtheiten, welche an Behältern einer solchen Deponieanlage aufgetreten sind, einen verhältnismäßig großen Arbeitsaufwand. Es ist schwierig Behälter, welche undicht geworden sind, aufzufinden, und es ist auch schwierig, derartige Behälter, welche wie erwähnt meist aus Beton bestehen, aus der Stapelung zu entnehmen. Ein weiterer Umstand, der sich in den Gestehungskosten einer solchen Deponieanlage niederschlägt, ist, daß die Behälter einer derartigen Deponieanlage in der Regel spezifisch für eine solche Anlage konzipiert werden und demgemäß in einer nicht allzu großen Stückzahl nur für den betreffenden Anwendungsfall hergestellt werden müssen; dies führt naturgemäß zu erhöhten Herstellungskosten.

Erhöhte Herstellungskosten durch Einzelherstellung der für ein bestimmtes Projekt gehörenden Teile einer Deponieanlage und ein großer Arbeitsaufwand für ein späteres Entnehmen einzelner Partien von in einer Deponieanlage lagernden Abfällen ergeben sich auch bei Deponieanlagen, welche in Form stationärer Großbehälter in Form von Bauwerken ausgeführt sind (AT-B-387 344).

Es ist ein Ziel der vorliegenden Erfindung, eine Deponieanlage eingangs erwähner Art zu schaffen, welche auf einfache Weise mit geringem Aufwand errichtet werden kann und welche auch auf einfache Weise mit einem hohen Zuverlässigkeitsgrad überwacht werden kann, ohne daß es dafür besonders komplizierter und schwer auf ihre korrekte Funktion überprüfbarer Einrichtungen oder eines besonders hochqualifizierten Personals bedarf, und welche es auch ermöglicht, daß einzelne der gestapelten Lagerbehälter ohne weiteres der Deponieanlage entnommen werden können, so daß man im Bedarfsfall solche Behälter mitsamt den in ihnen befindlichen Abfällen aus der Deponieanlage entfernen und zu Einrichtungen verbringen kann, die speziell für das Entleeren undicht gewordener Behälter und/oder für ein Aufarbeiten des in einem solchen Behälter enthaltenen Abfalls ausgebildet sind.

Die erfindungsgemäße Deponieanlage eingangs erwähnter Art ist gemäß dem kennzeichnenden Teil des Anspruches 1 ausgebildet. Durch diese Ausbildung kann der vorstehend angeführten Zielsetzung gut entsprochen werden. Es wird durch die erfindungsgemäße Ausbildung der Deponieanlage möglich, die Anlage bzw. deren Behälter jederzeit auf einfache Weise daraufhin überwachen zu können, ob die Dichtheit der Behälter in ausreichendem Maß gegeben ist, wobei auftretende Schäden schon am Beginn des Schadhaftwerdens feststellbar sind, und man kann schadhafte Behälter auf einfache Weise der Deponieanlage entnehmen und einer Schadensbehebung zuführen; korrespondierendes gilt für den Fall, daß Deponiegut aus anderen Gründen, z.B. um aufbereitet zu werden, der Deponie bzw. einem in derselben vorgesehenen Behälter entnommen werden soll. Hierzu stehen für Transportbehälter diesen angepaßte Transportmöglichkeiten zur Verfügung. Es können in Serien erzeugte Transportbehälter, wie sie für vielerlei verschiedene Transportvorgänge eingesetzt werden, für die erfindungsgemäße Deponieanlage Verwendung finden, was nicht nur dahingehend vorteilhaft ist, daß in Serien erzeugte Transportbehälter verhältnismäßig preisgünstig zur Verfügung stehen, sondern auch dahingehend, daß solche serienerzeugte Transportbehälter in der Regel maßgenau gefertigt sind, was die Fertigung und den Einbau einer Auskleidung, wie sie die Bodenwanne oder die Innenhaut der bei der erfindungsgemäß ausgebildeten Deponieanlage vorgesehenen Behälter darstellt, sehr erleichtert und damit auch verbilligt; letzteres insbesondere, weil bei hinreichender Maßgenauigkeit der Transportbehälter eine Vorfertigung von die Auskleidung bildenden Elementen möglich ist. Eine freistehende Anordnung der Transportbehälter ermöglicht es auch, daß man sich jederzeit über den Zustand solcher Behälter auf einfache Weise rein optisch vergewissern kann.

Durch die in jedem einzelnen der in der Deponieanlage beieinander angeordneten Behälter vorgesehene Kontrolleinrichtung, welche mit einer außen vorgesehenen Indikatoreinrichtung in Verbindung steht, kann jederzeit an der Außenseite der Behälter ohne komplizierte Apparaturen festgestellt werden, wenn im Inneren dieser Behälter freie Flüssigkeiten oder Feuchte, insbesondere kontaminierende Flüssigkeiten, auftreten oder freiwerden, so daß Abhilfe geschaffen werden kann, ehe es zu einem unkontrollierten Austreten solcher Flüssigkeiten kommt. Die Abhilfe kann dabei gezielt am Entstehungsort eingeleitet werden, da ja schon beim Erkennen des Vorliegens solcher Flüssigkeiten bzw. Feuchte auch unmittelbar eine Aussage darüber vorliegt, in welchem Behälter der Deponieanlage die erwähnten freien Flüssigkeiten bzw. Feuchte, welche bei ungünstiger Weiterentwicklung im Lauf der Zeit unkontrolliert austreten könnten, vorliegen, so daß keine weiteren Arbeiten zur Ermittlung der Schadensstelle erforderlich sind. Es kann der betreffende Behälter sogleich an Ort und Stelle saniert werden, wenn dies auf einfache Art möglich ist, oder zu einer Einrichtung verbracht werden, welche für das Öffnen des Behälters und für das gegebenenfalls erforderliche Entleeren desselben sowie erforderlichenfalls auch für eine Reparatur des Behälters eingerichtet ist.

Man kann bei der erfindungsgemäßen Deponieanlage die unterzubringenden Abfälle rasch und einfach einlagern und man kann die Dichtheit jedes einzelnen Behälters, die Beschaffenheit oder Veränderung des Abfalls in den Behältern, oder Veränderungen des einen oder des anderen für beliebig lange Zeit überprüfen und unter Kontrolle halten, und auch jeden einzelnen Behälter jederzeit aus der Deponie entnehmen, um den Inhalt einer Wiederverwertung, oder einer weiteren Konditionierung oder Entsorgung zuzuführen, oder um Veränderungen oder Verbesserungen am Behälter oder an den Kontroll- bzw. Drainagesystem durchzuführen, oder schließlich durch Adaptierung der Deponie und/oder Konditionieren der Abfälle ein emissionsfreies Endlager herstellen. Es ist sowohl eine Zwischenlagerung unter Kontrolle über beliebig lange Zeiträume, als auch eine Endlagerung, wobei die Kontrolle und Sanierbarkeit auch des Endlagers auf unbeschränkte Zeit erhalten bleiben kann, möglich; da jede einzelne Zelle des Lagers kontrollierbar und sanierbar ist, ist die Beschaffenheit des Untergrundes, auf welchem das Lager errichtet wird, von sekundärer Bedeutung.

Es erleichtert das Entnehmen von Behältern aus der Deponieanlage, daß die Behälter in einer Schicht oder unverschachtelt übereinandergestapelt angeordnet sind und die Verbindungen von den Behältern zur Indikatoreinrichtung und/oder zu Drainageleitungen lösbar ausgebildet sind, so daß jeder einzelne Behälter entfernt werden kann, ohne die Funktion der Gesamtanlage zu beeinträchtigen.

Es ist bei der erfindungsgemäßen Deponieanlage vorzugsweise vorgesehen, daß die Kontrolleinrichtung eine im Behälterinneren im Bodenbereich des Behälters vorgesehene Drainageschicht umfaßt.

In den Behältern vorgesehene Drainagemittel geben neben der Möglichkeit des Erkennens von Undichtheiten im Inneren des Behälters auch die Möglichkeit eines einfachen Ableitens von in den Behältern vorliegenden Flüssigkeiten, so daß eine Kontamination der Umgebung durch unkontrolliertes Austreten von in den Behältern frei gewordenen Flüssigkeiten hintangehalten werden kann. Es ist eine Ausführungsform einer mit einer Drainageschicht in den Behältern versehenen erfindungsgemäßen Deponieanlage dadurch gekennzeichnet, daß die Drainageschicht mit einer von dieser Drainageschicht nach außen führenden Drainageleitung und/oder mit einem in bzw. an der Drainageschicht angeordneten Flüssigkeits- bzw. Feuchtesensor versehen ist, von dem eine Signalleitung nach außen führt.

Es ist sowohl für das Erkennen und Lokalisieren von Undichtheiten in den Behältern als auch für das Ableiten von Flüssigkeiten, welche in den Behältern freigeworden sind, von Vorteil, wenn diese Flüssigkeiten so rasch als möglich die Drainageleitung erreichen. Unter diesem Gesichtspunkt ist eine Ausführungsform der erfindungsgemäßen Deponieanlage günstig, welche dadurch gekennzeichnet ist, daß mindestens bei einem Teil der Behälter der Anlage die Drainageschicht den Seitenwänden des jeweiligen Behälters entlang hochgezogen ist. Diese Ausführungsform läßt das angestrebte Ziel, in einem der Behälter frei gewordene Flüssigkeit möglichst rasch zur Drainageableitung zu leiten, auch dann erreichen, wenn durch das im Behälter befindliche Füllgut ein direkter Durchfluß zum Bereich des Behälterbodens auf Schwierigkeiten stößt.

Eine weitere Ausführungsform der erfindungsgemäßen Deponieanlage ist dadurch gekennzeichnet, daß mindestens bei einem Teil der Behälter der Anlage zumindest im Bereich des Behälterbodens auf die Drainageschicht und eine diese überdeckende Innenhaut zum Behälterinneren hin folgend eine weitere Drainageschicht angeordnet ist, welche mit einer nach außen führenden Drainageableitung versehen ist. Bei dieser Ausführungsform ist einerseits eine weitere Verbesserung der Eigenschaften der Deponieanlage hinsichtlich des Erkennens des Vorliegens von freigewordener Flüssigkeit in den Behältern und hinsichtlich der Ableitung solcher Flüssigkeiten aus den Behältern erzielbar und andererseits auch die Möglichkeit gegeben, in die Behälter eingelagerte Abfälle zu konditionieren, indem aus diesen Abfällen Flüssigkeiten oder Gase abgeleitet werden. Man kann über das direkt mit dem Abfall in Verbindung stehende Drainagesystem auch nach erfolgter Entwässerung und/oder Entgasung Füllstoffe wie Zement, Beton, Kunststoff, Bitumen oder gleichwertiges zur endgültigen Stabilisierung der Abfälle einführen. Ein Verstopfen der Kontrolldrainagen und der Kontrolldrainageleitungen ist dabei nicht möglich, da die Kontrolldrainage nicht mit den innerhalb der Behälterinnenhaut befindlichen Abfällen in Verbindung steht. Wenn die Deponiebehälter einer Endlagerung zugeführt werden sollen, können gegebenenfalls auch die Zwischenräume bzw. die Entwässerungs- und Entgasungszonen mit entsprechendem Füllmaterial wie Zement, Bitumen, Kunststoff oder dergleichen ausgefüllt werden.

Wenn damit zu rechnen ist, daß in den Abfällen, welche in die Behälter gefüllt worden sind, Gase auftreten, sieht man vorteilhaft mindestens bei einem Teil der Behälter der Anlage im oberen Teil der Behälter einen nach außen führenden Gasauslaß vor, welcher vorzugsweise von einer im Behälter vorgesehenen Gasdrainage ausgeht. Es können so die Gase abgeleitet werden, ehe es zu einem unkontrollierten Austreten solcher Gase kommt.

Eine hinsichtlich des Erkennens des Vorliegens freier Flüssigkeit bzw. Feuchte in den Behältern vorteilhafte Ausführungsform der erfindungsgemäßen Anlage ist dadurch gekennzeichnet, daß die Indikatoreinrichtung zum Sammeln von aus dem Inneren der Behälter durch Drainageableitungen kommenden Flüssigkeiten und/oder Gasen Kontrollgefäße aufweist, welche eine Kontrolle des Vorliegens solcher Flüssigkeiten und/oder Gase auf visuellem Weg und/oder durch auf solche Medien ansprechende Sensoren erlauben, und daß gegebenenfalls zur Förderung des Flusses der Flüssigkeiten und/oder Gase in die Kontrollbehälter Absaugeinrichtungen vorgesehen sind. Ein einfacher Aufbau der Kontrolleinrichtung ergibt sich, wenn mindestens bei einem Teil der Behälter die Kontrolleinrichtung mit den elektrischen Widerstand einer von Flüssigkeiten bzw. Feuchte beeinflußten Meßstrecke erfassenden Sensoren ausgestattet ist.

Bei der erfindungsgemäßen Deponieanlage sind als Behälter vorzugsweise jene quaderförmigen Transportbehälter vorgesehen, welche im allgemeinen Sprachgebrauch üblicherweise "ISO-Container" bezeichnet werden und für den Straßen-, Bahn- und Schiffstransport vorgesehen sind. Es können problemlos auch gebrauchte Transportbehälter Verwendung finden. Die genannten Behälter haben standardisierte, exakte Abmessungen und können auf einfache Weise transportiert werden, wobei es vorteilhaft ist, daß für diese Behälter an vielen Orten entsprechende Transporteinrichtungen zur Verfügung stehen, was auch den Vorteil bietet, daß diese Behälter problemlos an jenen Orten, wo die Abfälle anfallen, beladen werden können, wonach man sie unter Benützung der vielerorts vorhandenen Transportmittel gefüllt zur Deponieanlage bringen kann. Dort können diese Behälter problemlos aneinandergereiht und aufeinander gestapelt werden.

Die im Inneren der, vorzugsweise aus Stahl oder Beton bestehenden, Transportbehälter vorgesehenen Abdichtungs- und/oder Kontrolleinrichtungen können vorteilhaft im wesentlichen aus korrosionsbeständigen Kunststoffen wie HDPE oder PVC in dichtverschweißter Ausführung oder auch in Kombination von Kunststoff und Metallfolien, ebenfalls in verschweißter Ausführung, bestehen. Je nach Erfordernis besteht die Auskleidung des Transportbehälters aus einer dichten Bodenwanne oder aus einer Innenhaut, die den Boden und die Seitenwände des Behälters auskleidet, wobei die Bodenfläche vorzugsweise doppelt in Form einer Kontrolldrainage und einer weiteren Bodenabdichtung ausgeführt ist; eine Innenhaut kann auch alle Innenflächen des Behälters überdecken. Man kann entweder nur im Bodenbereich oder im Bodenbereich und an den Seitenwänden eine Kontrolldrainage vorsehen, oder eine untere und seitliche Innenhaut samt Kontrolldrainage und eine darüber angeordnete Entwässerungsdrainage, oder eine über alle Innenflächen reichende Auskleidung mit unten angeordneter Kontrolldrainage und oben angeordneter Entgasungszone, oder eine über alle Innenflächen reichende Auskleidung mit unterer und/oder seitlicher Kontrolldrainage und unten angeordneter Entwässerungsdrainage und oben angeordneter Entgasungszone.

In speziellen Fällen kann es auch Vorteile bringen, wenn man die Sonderabfälle in kleinen Behältern unterbringt und diese kleinen Behälter in Behälter der wie vorstehend erwähnt als "ISO- Container" bezeichneten Art einlagert und Zwischenräume zwischen den solcherart eingelagerten kleineren Behältern mit einem geeigneten Vergußmittel, z.B. Zement oder Bitumen, ausfüllt.

Dadurch, daß bei der erfindungsgemäßen Deponieanlage jeder Behälter für sich über ein eigenes Kontroll- und Sicherheitssystem verfügt und disponibel und transportabel ist, kann der Standort der Deponieanlage weitgehendst unabhängig von den geologischen Beschaffenheiten gewählt werden. Man kann dabei im Hinblick auf die bei der erfindungsgemäßen Deponieanlage besonders in Betracht kommende Möglichkeit des Entnehmens und Zubringens von Behältern vorteilhaft einen Standort in unmittelbarer Nähe von Verkehrswegen wählen. Es ergibt sich auch die Möglichkeit, der Deponieanlage eine weitere Funktion zukommen zu lassen, wie z.B. als Schallschutz bei Fahrwegen, wie z.B. Autobahnen, Straßen oder Schienenverkehrswegen; ebenso als Sichtschutz oder als Barrieren bei solchen Verkehrswegen oder bei Mittelstreifen der Autobahnen. Die Deponieanlagen gegenständlicher Art können auch als Umschließungswälle bei Deponien für andere Abfälle oder für Hausmüll vorgesehen werden. In jedem Fall kann die Kontrolle der Deponieanlage gemeinsam mit der Kontrolle der Verkehrswege oder der Kontrolle der Deponie üblicher Art auf beliebig lange Zeit durchgeführt werden. Ebenso kann die Deponieanlage eine Umgrenzung eines kontaminierten Gebietes bilden. Weiters lassen sich mit diesen Deponieanlagen die ungenutzten Hohlräume von Kiesanlagen, Steinbrüchen und dergleichen ausfüllen, wobei die Anordnung immer so zu erfolgen hat, daß jeder einzelne der Behälter so lange entfernbar bleibt, so lange nicht die Deponieanlage in ein Endlager umgestaltet wird. Insbesondere ist es bei dieser Anlage jederzeit möglich, das Verhalten der Abfälle und der Dichtungssysteme laufend zu kontrollieren und weiterzuentwickeln, um so Zug um Zug eine dem jeweiligen Stand der Technik entsprechende Endlagerung und/oder Wiederverwertung und/oder Entsorgung anderer Art festlegen zu können. Die Möglichkeit Abfälle kurzfristig, auf wirtschaftliche Art erfassen und unter Kontrolle halten zu können ist auch als Vorteil anzusehen.

Die Erfindung bezieht sich auch auf einen Behälter für eine wie vorstehend charakterisiert ausgebildete erfindungsgemäße Deponieanlage, der mit einer Auskleidung aus korrosionsbeständigem Material versehen ist. Ein solcher Behälter ist dadurch gekennzeichnet, daß der Behälter ein aus Metall bestehender Transportbehälter, vorzugsweise ein sogenannter "ISO-Container", ist,
und daß im Behälter eine das Vorliegen von freier Flüssigkeit bzw. Feuchte im Behälter erfassende Kontrolleinrichtung angeordnet ist.

Vorteilhafte Weiterbildungen dieser Behälter können durch das Vorsehen der in den Ansprüchen 26 bis 28 angeführten Merkmale erhalten werden.

Die Erfindung wird nun unter Bezugnahme auf Beispiele, welche in der Zeichnung schematisch dargestellt sind, weiter erläutert.

In der Zeichnung zeigt:
Fig. 1 eine Ausführungsform einer erfindungsgemäß ausgebildeten Deponieanlage in schematisierter Seitenansicht,
Fig. 2 diese Ausführungsform in schematisierter Draufsicht,
Fig. 3 einen Kontrollbehälter einer erfindungsgemäßen Deponieanlage in Seitenansicht,
Fig. 4 andere Ausführungsformen von Kontroll- bzw. Indikatorbehältern einer erfindungsgemäßen Deponieanlage,
Fig. 5 eine andere Ausführungsform einer erfindungsgemäßen Deponieanlage in schematisiertem Schnitt,
Fig. 6 diese Ausführungsform in schematisierter Draufsicht,
Fig. 7 eine weitere Ausführungsform einer erfindungsgemäßen Deponieanlage in schematisiertem Schnitt,
Fig. 8 diese Ausführungsform in schematisierter Draufsicht,
Fig. 9 einen Teil einer erfindungsgemäßen Deponieanlage mit freistehenden Behältern in schematisierter Ansicht,
Fig. 10 gleichfalls in schematisierter Ansicht eine erfindungsgemäße Deponieanlage mit Behältern, welche überdacht oder ummantelt sind, und
Fig. 11a bis Fig. 11f eine Anzahl von Ausführungsformen von Behältern für eine erfindungsgemäße Deponieanlage im Schnitt.

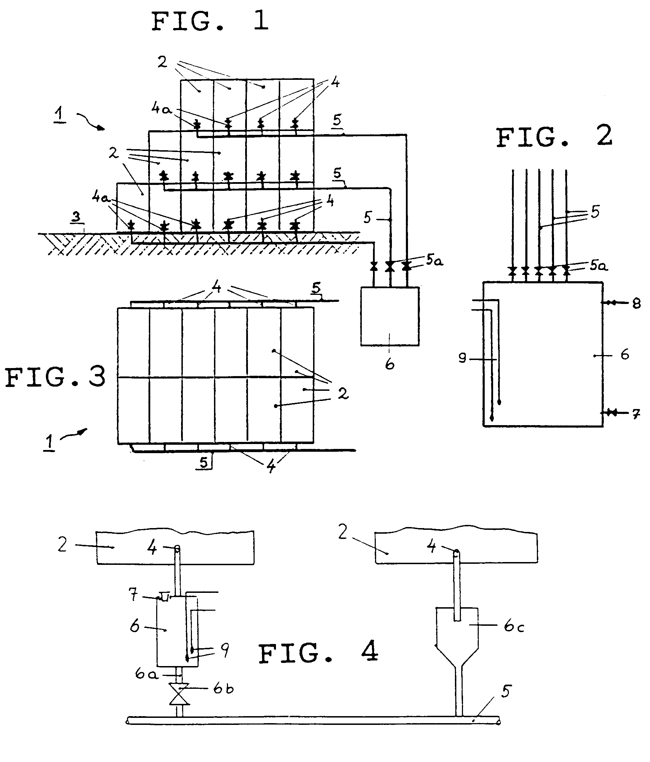

Bei der in Fig. 1 dargestellten Ausführungsform einer Deponieanlage 1 ist eine Mehrzahl von Behältern 2, welche zur Aufnahme von Abfall bestimmt und geeignet sind, freistehend nebeneinander aufeinander gestapelt angeordnet. Die Behälter 2 stehen dabei unverschachtelt übereinander, so daß es auf relativ einfache Weise möglich ist, auch im Inneren des Stapels befindliche Behälter im Bedarfsfall aus dem Stapel zu entfernen, wobei hierfür allenfalls die unmittelbar über dem betreffenden zu entfernenden Behälter stehenden Behälter abzuheben sind. Die Behälter 2 stehen im in Fig. 1 dargestellten Fall auf einem im wesentlichen ebenen Grundstück 3. Die Aufstellung der erfindungsgemäßen Deponieanlage 1 ist aber nicht an ein ebenes Grundstück 3 gebunden; vielmehr ist es auch durchaus möglich die Deponieanlage in natürlichem oder künstlich geschaffenem unebenen Gelände, in Mulden, Terrassen oder dergl. wie sie z.B. bei Steinbrüchen vorliegen, anzuordnen, wobei lediglich dafür zu sorgen ist, daß auch in einem solchen Fall die für die erfindungsgemäß ausgebildete Deponieanlage wesentliche Zugänglichkeit zu den Behältern bzw. die Zufahrtsmöglichkeit für Transportmittel, mit denen die Behälter im Bedarfsfall einfach entnommen werden können, gewährleistet ist. Jeder Behälter 2, welche als Transportbehälter ausgebildet sind, ist mit einer Kontrolleinrichtung versehen, welche die einzelnen Behälter auf das Auftreten bzw. Vorliegen von freier Flüssigkeit bzw. Feuchte in diesen Behältern überwacht. Diese Kontrolleinrichtungen umfassen eine im Behälterinneren im Bodenbereich des jeweiligen Behälters angeordnete Drainageschicht, von der eine Kontroll- bzw. Drainageleitung 4 nach außen führt. Die Kontroll- bzw. Drainageleitungen 4 münden in Sammelleitungen 5, welche zu einem Kontrollbehälter 6 führen, der eine Indikatoreinrichtung für die Feststellung von aus den Behältern 2 kommenden Flüssigkeiten bildet. Ein Beispiel eines solchen Kontrollbehälters 6 ist schematisch in Fig. 3 dargestellt. Dieser Kontrollbehälter kann transparent ausgebildet sein, so daß durch einfache Sichtkontrolle das Vorliegen von Abflüssen aus den Behältern 2 erkennbar ist; solche Abflüsse können auf den Zeitablauf bezogen mengenmäßig gering sein. Der Kontrollbehälter 6 ist vorzugsweise auch mit Entnahmeeinrichtungen 7 und Entlüftungseinrichtungen 8 ausgestattet, um ein einfaches Ableiten der Flüssigkeiten zu ermöglichen. Ein solcher Kontrollbehälter 6 kann aber auch als einfache Wanne ausgebildet sein. Vorzugsweise ist der Kontrollbehälter 6 auch mit einem Flüssigkeitssensor 9 zur selbständigen Überwachung auf das Vorliegen von Flüssigkeit versehen. Die Signale eines solchen Sensors können, z.B. über Funk, zu einer zentralen Stelle weitergeleitet werden.

Absperrventile 4a in den Kontroll- bzw- Drainageleitungen 4 und Absperrventile 5a in den Sammelleitungen 5 ermöglichen beim Auftreten eines Zuflusses zum Kontrollbehälter 6 ein selektives Abschalten der Sammelleitungen 5 und der Kontroll- bzw. Drainageleitungen 4, und es kann dadurch jener Behälter 2, in welchem die Flüssigkeit auftritt, einwandfrei festgestellt werden. Es ist auch möglich jede einzelne Kontroll- bzw. Drainageleitung 4 direkt zum Kontrollbehälter 6 zu führen. Man kann auch Flüssigkeitssensoren direkt in die Drainage in den Behältern 2 einbauen und über elektrische Leitungen die Signale der Sensoren einem zentralen Kontrollsystem zuführen. In korrespondierender Weise, wie dies in den Fig. 1 bis 3 für die Flüssigkeitserfassung und -ableitung dargestellt ist, kann man an den Behältern 2 auch einen nach außen führenden Gasauslaß im oberen Teil dieser Behälter 2 vorsehen und in Verbindung damit in den Behältern 2 eine Gasdrainage. Von den Gasauslässen kann man, wie dies vorstehend für die Flüssigkeitserfassung erörtert ist, Entgasungsleitungen bzw. Sammelleitungen zu einer Kontrollstelle führen.

Die Leitungsverbindungen von den Behältern 2 zu der Indikatoreinrichtung bzw. zu einem Kontrollsystem bildet man lösbar aus, damit einzelne Behälter entfernt werden können, ohne die Funktion der Anlage zu beeinträchtigen.

Bei den in Fig. 4 dargestellten Ausführungsformen sind den einzelnen Behältern 2 individuell Kontrollbehälter 6 zugeordnet. Diese Kontrollbehälter sind direkt an Drainageleitungen 4 der Behälter 2 angeschlossen und vorzugsweise transparent ausgebildet, so daß jederzeit durch einfache Sichtkontrolle festgestellt werden kann, ob aus den einzelnen Drainageleitungen 4 Flüssigkeit austritt. Die Kontrollbehälter 6 sind ihrerseits über Verbindungsleitungen 6a mit den Sammelleitungen 5 verbunden. Vorzugsweise ist dabei in die Verbindungsleitungen 6a eine individuell betätigbare Absperrung 6b eingefügt, so daß ein Ansammeln von Flüssigkeit herbeigeführt werden kann und damit durch einfache Sichtkontrolle auch Drainageabflüsse erfaßt werden können, welche auf den Zeitablauf bezogen mengenmäßig gering sind. Die Kontrollbehälter 6 sind weiter vorzugsweise mit verschließbaren Öffnungen 7 zur Entnahme von Proben sowie gegebenenfalls auch mit Sensoren 9 zur selbsttätigen Überwachung dieser Behälter auf das Vorliegen von Flüssigkeit in ihnen und gewünschtenfalls auch zur Bestimmung chemisch-physikalischer Kennwerte (z.B. pH-Wert) von Flüssigkeiten, die sich in den Gefäßen ansammeln, versehen. Anstelle solcher transparenter Kontrollbehälter 6 kann man gegebenenfalls auch, wie in Fig. 4 rechts dargestellt ist, einfache Auffangbecher 6c vorsehen, deren allfälliger Inhalt dadurch, daß diese Becher nach oben hin offen sind, auf einfache Weise visuell überwacht werden kann, und aus denen im Bedarfsfall auch problemlos Proben zur Untersuchung der Natur von Flüssigkeiten entnommen werden können, welche sich aus den Drainageleitungen 4 kommend in diesen Auffangbechern 6c angesammelt haben.

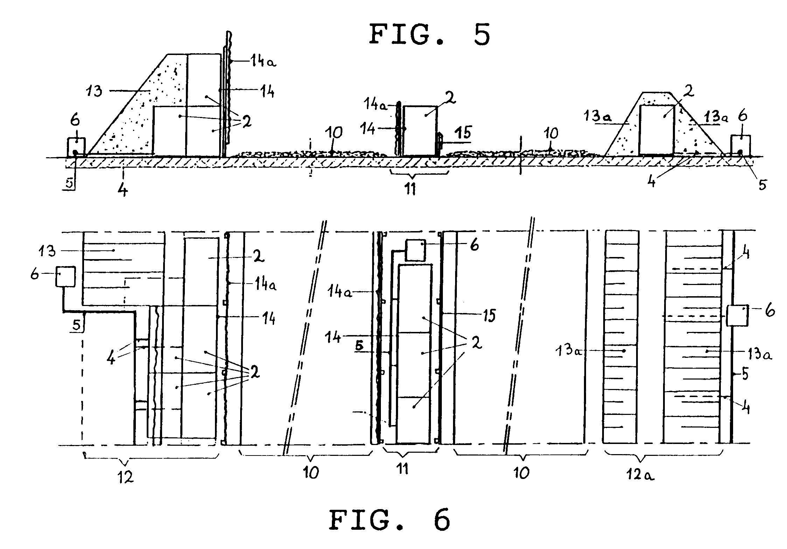

Die in den Fig. 5 und 6 dargestellte Ausführungsform einer Deponieanlage ist direkt an einem Verkehrsweg angeordnet, so daß ohne aufwendige Aufschließungen eine direkte Zufahrtsmöglichkeit für Transportmittel gegeben ist, mit denen die Behälter 2 zur Deponieanlage gebracht und von dieser weggeführt werden können. Es ist bei dieser Ausführungsform weiter eine zusätzliche Mehrfachfunktion gegeben, weil die aneinandergereiht angeordneten Deponiebehälter 2 entlang von Fahrbahnen 10, wie z.B. einer Autobahn, als Schallschutzeinrichtung 12, 12a oder als Blendschutz und Barriere am Mittelstreifen 11 dienen. Dabei ist es möglich, die Behälter 2 einseitig oder beidseitig zur Bildung von Böschungen 13, 13a mit Erdreich zu überdecken und so Schallschutzwände oder Schallschutzwälle herzustellen und ihnen durch Bepflanzung des Erdreiches oder Überdecken der Sichtflächen 14 der Behälter 2 mit einer entsprechenden Struktur 14a zur Schallabsorption, ein ansehliches Aussehen zu geben. Auch das Anbringen von Leitplanken 15, z.B. an den am Mittelstreifen angeordneten Behältern 2 ist zweckmäßig; bei den Behältern dieser Ausführungsform sind ebenfalls die Kontroll- und Drainagesysteme zusammengefaßt, und es sind Kontroll- bzw. Indikatoreinrichtungen 6 in Zwischenräumen der Behälterreihen angeordnet. Die Drainage- bzw. Kontrolleitungen 4 der Behälter 2 sind am Fuß der Böschungen bzw. des dadurch gebildeten Walles nach außen zu den dort angeordneten Kontrollbehältern 6 geführt.

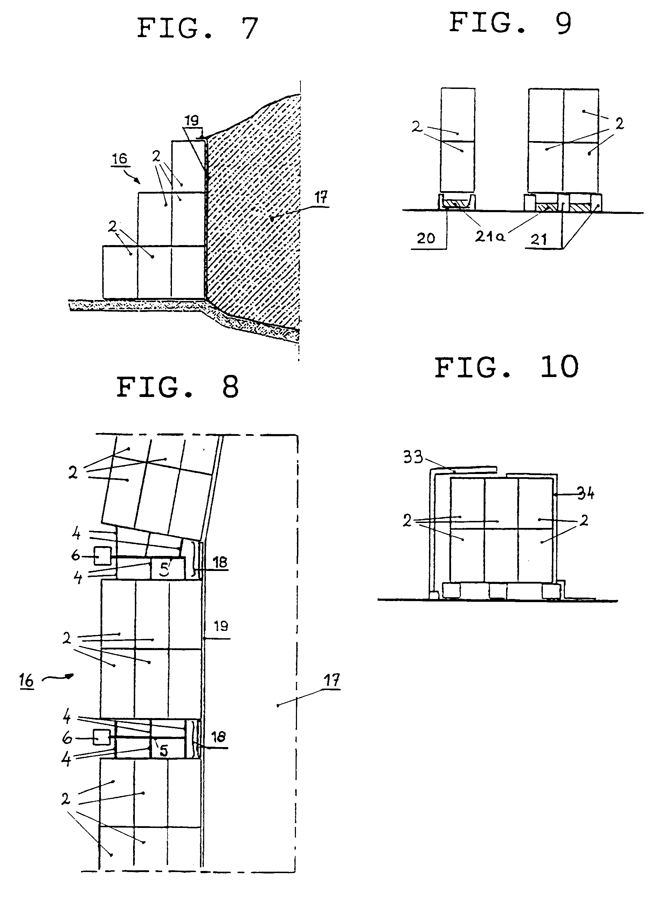

Bei der in den Fig. 7 und 8 dargestellten Ausführungsform einer Deponieanlage, die aus aufeinandergeschichteten Behältern 2 gebildet ist, ist eine Mehrfachfunktion dadurch gegeben, daß diese Deponie einen Wall zur Umschließung einer Abfalldeponie für andere als die in den Behältern gelagerten Abfällen, z.B. für Hausmüll, bildet. Die einen Wall 16 bildende Deponieanlage umschließt einen weiteren Deponiekörper 17, wobei der Wall 16 in Blöcke mit entsprechenden Zwischenräumen 18 für die Aufnahme der Kontroll-bzw. Drainageleitungen 4, 5 und des Kontrollbehälters 6 gegliedert ist; der Zwischenraum 18 zwischen den Blöcken ist mit Beton- oder Holzbohlen überbrückt, die auch als Auflage für eine Abdichtung 19 des Deponiekörpers 17 dienen. Diese Abdichtung kann z.B. eine entsprechend starke Kunststoffolie sein.

Bei den in Fig. 9 dargestellten Teilen einer Ausführungsform einer Deponieanlage sind einzelne neben- oder übereinander angeordnete Behälter 2 oder eine Gruppe von Behältern 2 auf Wannen 20, vornehmlich aus Beton oder Stahl, welche innen korrosionsbeständig ausgebildet sind, oder auf Sockeln 21 aus Holz, Stahl oder Beton angeordnet; als zusätzliche Sicherheit für den Fall, daß die Deponieanlage als Endlager ausgebildet wird, können die Hohlräume der Wannen 20 oder die Zwischenräume zwischen den Sockeln 21 mit einer dichten Bodendecke 21a, z.B. aus Beton, Kunststoff, Bitumen und dergleichen, ausgefüllt werden, und es ist so eine zusätzliche Barriere gebildet.

Fig. 10 zeigt schematisch eine Deponieanlage, deren freistehend aufgestellte Behälter 2 durch ein Flugdach 33 überdacht oder durch eine Ummantelung 34 aus Kunststoff, Bitumenbahnen, Beton, Keramik oder dergl. umschlossen sind.

Die Fig. 11a bis 11f zeigen Ausführungsformen von Behältern für eine erfindungsgemäße Deponieanlage im Schnitt, zur Erläuterung verschiedener Varianten der Auskleidung und der Drainageschichten, welche in solchen Transportbehältern vorgesehen sind.

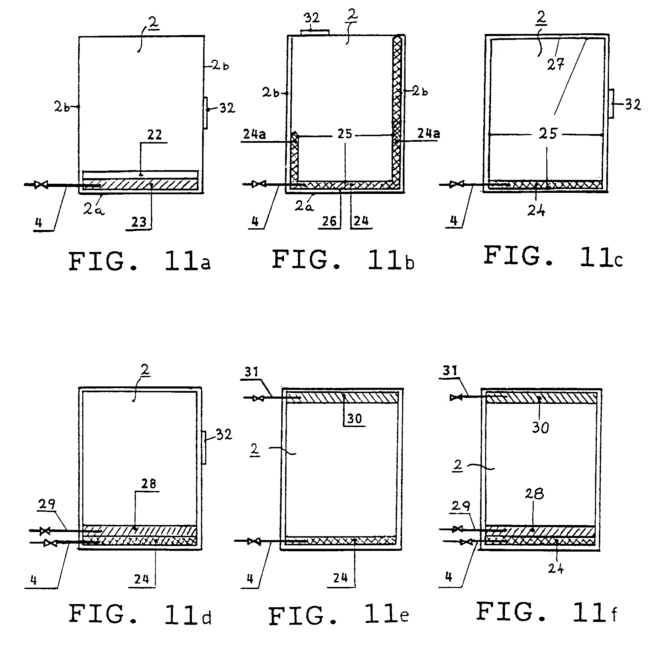

Fig. 11a zeigt einen Behälter 2 mit einer Auskleidung in Form einer Wanne 22 mit einer nach oben offenen Drainageschicht von der die Drainage- bzw. Kontrolleitung 4 ausgeht. Beim Behälter nach Fig. 11b ist eine Innenhaut 25 vorgesehen, welche sowohl den Boden 2a als auch die Seitenwände 2b überdeckt, wobei zwischen dieser Innenhaut 25 und einer als doppelter Boden ausgeführten zusätzlichen Abdichtung 26 eine geschlossene Kontrolldrainageschicht 24 vorgesehen ist, von welcher die Drainageleitung 4 durch die Behälterwand nach außen geführt ist; die Drainageschicht 24 kann auch gewünschtenfalls mit Abschnitten 24a über einen Teil der Seitenwandhöhe (Fig. 11b links) oder über die volle Seitenwandhöhe (Fig. 11b rechts) hochgezogen sein; die Ausführungsform nach Fig. 11c hat eine auch über die Decke 27 des Behälters geführte Innenhaut 25, so daß der im Behälter befindliche Abfall allseitig dicht ummantelt wird. Die Ausführungsform nach Fig. 11d entspricht der nach Fig. 11c, wobei aber über der Kontrolldrainage 24 eine weitere, nach oben offene Drainage 28 angeordnet ist, welche zur Entwässerung des Abfalls separat und unabhängig von der Kontrolldrainage 24 vorgesehen ist und über eine Drainageleitung 29 entwässert, und zwar unabhängig von der Kontrolldrainage 24. Bei der Ausführungsform nach Fig. 11e ist eine Entgasungsdrainage 30 vorgesehen, welche nach unten zum Abfall hin offen ist und über einen Gasauslaß 31 unabhängig von den anderen Drainagesystem Gase abzuleiten erlaubt. Die Ausführungsform nach Fig. 11f hat sowohl, analog der Ausführungsform nach Fig. 11d, eine Kontrolldrainage 24 und eine zusätzliche Drainage 28, und weiter auch eine Entgasungsdrainage 30 mit einer Gasableitung 31.

An der Außenseite der Behälter 2 kann man vorteilhaft ein Behältnis 32 zur Aufnahme von Aufzeichnungen über den Behälterinhalt und über chemische Analysen desselben vorsehen. Ein solches Behältnis wird witterungs- und korrosionsbeständig ausgebildet.

## Patentansprüche

1. Deponieanlage zur Aufnahme von Abfällen, welche eine Mehrzahl von mit einer Auskleidung aus korrosionsbeständigem Material versehenen Transportbehältern (2) und eine Kontrolleinrichtung (6) zum Erkennen von aus dem deponierten Gut austretenden Abflüssen aufweist, wobei die Transportbehälter beieinander angeordnet, insbesondere gestapelt sind, dadurch gekennzeichnet, daß in jedem der beieinander angeordneten Transportbehälter (2) eine das vorliegen von freier Flüssigkeit bzw. Feuchte im Behälter erfassende Kontrolleinrichtung (4, 5, 23, 24) angeordnet ist, welche mit einer außen vorgesehenen Indikatoreinrichtung (9) in Verbindung steht, daß die Auskleidung der Transportbehälter in Form einer dichten Bodenwanne (22), welche den Boden (2a) des Behälters (2) und eine daran anschließende Zone der Behälterseitenwände (2b) überdeckt, oder in Form mindestens einer dichten Innenhaut (25), welche zumindest den Boden (2a) und die Seitenwände (2b) des jeweiligen Behälters (2) überdeckt, ausgebildet ist, und daß die Behälter (2) in einer Schicht oder unverschachtelt übereinandergestapelt angeordnet sind und die Verbindungen von den Behältern zur Indikatoreinrichtung (6, 9) und/oder zu Drainageleitungen (4, 5) lösbar ausgebildet sind, so daß jeder einzelne Behälter (2) entfernt werden kann, ohne die Funktion der Gesamtanlage (2) zu beeinträchtigen.

2. Deponieanlage nach Anspruch 1, dadurch gekennzeichnet, daß die Kontrolleinrichtung eine im Behälterinneren im Bodenbereich des Behälters vorgesehene Drainageschicht (23, 24) umfaßt.

3. Deponieanlage nach Anspruch 2, dadurch gekennzeichnet, daß die Drainageschicht (23, 24) mit einer von dieser Drainageschicht nach außen führenden Drainageleitung (4) und/oder mit einem in bzw. an der Drainageschicht angeordneten Flüssigkeits- bzw. Feuchtesensor versehen ist, von dem eine Signalleitung nach außen führt.

4. Deponieanlage nach Anspruch 2 oder 3, dadurch gekennzeichnet, daß mindestens bei einem Teil der Behälter (2) der Anlage (1) die Drainageschicht (24, 24a) den Seitenwänden (2b) des jeweiligen Behälters (2) entlang hochgezogen ist.

5. Deponieanlage nach einem der Ansprüche 2 bis 4, dadurch gekennzeichnet, daß mindestens bei einem Teil der Behälter (2) der Anlage (1) zumindest im Bereich des Behälterbodens (2a) auf die Drainageschicht (24) und eine diese überdeckende Innenhaut zum Behälterinneren hin folgend eine weitere Drainageschicht (28) angeordnet ist, welche mit einer nach außen führenden Drainageleitung (29) versehen ist.

6. Deponieanlage nach einem der Ansprüche 1 bis 5, dadurch gekennzeichnet, daß mindestens bei einem Teil der Behälter (2) der Anlage (1) im oberen Teil der Behälter (2) ein nach außen führender Gasauslaß (31) vorgesehen ist, welcher vorzugsweise von einer im Behälter (2) vorgesehenen Gasdrainage (30) ausgeht.

7. Deponieanlage nach einem der Ansprüche 1 bis 6, dadurch gekennzeichnet, daß die Indikatoreinrichtung zum Sammeln von aus dem Inneren der Behälter durch Drainageleitungen kommenden Flüssigkeiten und/oder Gasen Kontrollgefäße (6) aufweist, welche eine Kontrolle des Vorliegens solcher Flüssigkeiten und/oder Gase auf visuellem Weg und/oder durch auf solche Medien ansprechende Sensoren (9) erlauben, und daß gegebenenfalls zur Förderung des Flusses der Flüssigkeiten und/oder Gase in die Kontrollbehälter (6) Absaugeinrichtungen vorgesehen sind.

8. Deponieanlage nach einem der Ansprüche 1 bis 7, dadurch gekennzeichnet, daß mindestens bei einem Teil der Behälter (2) die Kontrolleinrichtung (4, 6) mit den elektrischen Widerstand einer von Flüssigkeiten bzw. Feuchte beeinflußten Meßstrecke erfassenden Sensoren (9) ausgestattet ist.

9. Deponieanlage nach Anspruch 7, dadurch gekennzeichnet, daß eine Wanne, zu welcher Drainageleitungen (5) von einer Mehrzahl von Behältern (2) führen, als Kontrollgefäß vorgesehen ist.

10. Deponieanlage nach einem der Ansprüche 1 bis 9, dadurch gekennzeichnet, daß mindestens bei einem Teil der Behälter (2) der Anlage (1) unter den Behältern, welche vorzugsweise auf auf dem Grund vorgesehenen Sockeln (21) stehen, eine dichte Bodendecke (21a) vorgesehen ist, welche gegebenenfalls den Boden einer Wanne (22) bildet.

11. Deponieanlage nach einem der Ansprüche 1 bis 10, dadurch gekennzeichnet, daß die Behälter (2) quaderförmige Transportbehälter der für Straßen-, Bahn- und Schiffstransport vorgesehenen, als "ISO-Container" bezeichneten Art sind.

12. Deponieanlage nach einem der Ansprüche 1 bis 11, dadurch gekennzeichnet, daß die Behälter (2) aus Metall, insbesondere aus Stahl, bestehen und an ihrer Außenseite gegen die Einwirkung von Umgebungseinflüssen, insbesondere Feuchtigkeit oder dergl., mit einer Ummantelung (34) versehen sind, welche vorzugsweise aus Kunststoff, gegebenenfalls aber auch aus Beton, Holz oder Stahl besteht.

13. Deponieanlage nach einem der Ansprüche 1 bis 12, dadurch gekennzeichnet, daß mindestens bei einem Teil der Behälter (2) der Anlage (1) innerhalb der Behälter (2) gesonderte, direkt mit einem eingelagerten Abfall in Verbindung stehende Entwässerungs- und/oder Entgasungszonen (28, 30) mit separaten Ableitungen (29, 31) nach außen vorgesehen sind, über welche der Abfall entwässert oder entgast und so eine Konditionierung des Abfalls für seine Endlagerung vorgenommen werden kann.

14. Deponieanlage nach Anspruch 13, dadurch gekennzeichnet, daß zwischen die Abfälle Füllmaterial, wie z.B. Zement, Silikon, Beton, Bitumen, eingebracht ist, welches nach erfolgter Entwässerung und/oder Entgasung durch die Ableitungen in die Entwässerungs- bzw. Entgasungszonen eingeführt bzw. eingepreßt worden ist.

15. Deponieanlage nach einem der Ansprüche 1 bis 14, dadurch gekennzeichnet, daß die Transportbehälter (2) freistehend angeordnet sind.

16. Deponieanlage nach einem der Ansprüche 1 bis 14, dadurch gekennzeichnet, daß die Behälter (2) gegen Einflüsse aus dem Boden (3) isoliert und mit Erdreich überdeckt sind, und daß von den Behältern (2) ausgehende Drainage- und Kontrolleitungen (4, 5) aus der Überdeckung heraus geführt sind, und daß das überdeckende Erdreich (13) vorzugsweise bepflanzt ist.

17. Deponieanlage nach einem der Ansprüche 1 bis 16, dadurch gekennzeichnet, daß die Behälter (2) aneinandergereiht entlang von Fahrwegen (10) wie z.B. Autobahnen, Straßen- und Schienenwegen in Reihen nebeneinander und gegebenenfalls zum Teil übereinander als Schall- und/oder Sicht- bzw. Blendschutz und als Barrieren aufgestellt sind.

18. Deponieanlage nach Anspruch 17, dadurch gekennzeichnet, daß die dem Fahrbereich zugekehrten Seiten der Behälter (2) schallabsorbierend, z.B. durch Aufbringen von Struktur oder durch Bepflanzung, ausgestattet sind.

19. Deponieanlage nach Anspruch 17 oder 18, dadurch gekennzeichnet, daß die den Fahrbahnen (10) zugekehrten Seiten der Behälter (2) mit Leitplanken versehen sind.

20. Deponieanlage nach einem der Ansprüche 16 bis 19, dadurch gekennzeichnet, daß die Behälter (2) aneinandergereiht aufgestellt und zur Bildung eines Schallschutzwalles einseitig oder beidseitig mit Erdreich bzw. Schüttmaterial (13, 13a, 13b) überdeckt sind, welches vorzugsweise bepflanzt ist, wobei die Kontroll- und Drainagesysteme (4, 5, 6) jeweils am Fuß des Walles (16) zu einer zugänglichen Stelle nach außen geführt sind.

21. Deponieanlage nach einem der Ansprüche 1 bis 16, dadurch gekennzeichnet, daß die Behälter (2) als Umgrenzung einer Schüttungsdeponie (17) aufgestellt sind.

22. Deponieanlage nach einem der Ansprüche 1 bis 16, dadurch gekennzeichnet, daß die Behälter (2) aneinandergereiht, Mauern oder Wälle (16) bildend, als Umgrenzung eines kontaminierten Gebietes eingesetzt sind.

23. Deponieanlage nach einem der Ansprüche 1 bis 22, dadurch gekennzeichnet, daß mindestens bei einem Teil der Behälter (2) an der Außenseite derselben ein witterungs- und korrosionsbeständiges Behältnis (32) zur Aufnahme von Aufzeichnungen über den Behälterinhalt und über chemische Analysen desselben vorgesehen ist.

24. Behälter für eine Deponieanlage, der mit einer Auskleidung aus korrosionsbeständigem Material versehen ist, dadurch gekennzeichnet, daß der Behälter (2) ein aus Metall bestehender Transportbehälter, vorzugsweise ein sogenannter "ISO-Container", ist, und daß im Behälter (2) eine das Vorliegen von freier Flüssigkeit bzw. Feuchte im Behälter erfassende Kontrolleinrichtung (4, 23, 24) angeordnet ist.

25. Behälter nach Anspruch 24, dadurch gekennzeichnet, daß die Kontrolleinrichtung eine im Behälterinneren im Bodenbereich des Behälters (2) vorgesehene Drainageschicht (23, 24) umfaßt.

26. Behälter nach Anspruch 24 oder 25, dadurch gekennzeichnet, daß der Behälter (2) an seiner Außenseite gegen die Einwirkung von Umgebungseinflüssen, insbesondere Feuchtigkeit oder dergl., mit einer Ummantelung (34) versehen ist, welche vorzugsweise aus Kunststoff, gegebenenfalls aber auch aus Beton, Holz oder Stahl besteht.

27. Behälter nach einem der Ansprüche 24 bis 26, dadurch gekennzeichnet, daß der Behälter (2) an seiner Außenseite mit einem witterung- und korrosionsbeständigen Behältnis (32) zur Aufnahme von Aufzeichnungen über den Behälterinhalt versehen ist.

## Claims

1. A waste disposal facility for receiving wastes and comprising a plurality of transport containers (2) provided with a lining of corrosion-resistant material and a monitoring means (6) for detecting liquid discharge emanating from the dumped material, the transport containers being positioned adjacently one another, in particular stacked, characterised in that in each one of the adjacent transport containers (2), a monitoring means (4, 5, 23, 24) is arranged to detect the presence of free liquid or moisture in the container, which monitoring means is connected with an externally provided indicating means (9), that the lining of the transport containers is designed in the form of a leakproof bottom tub (22) covering the bottom (2a) of the container (2) and an adjoining zone of the container side walls (2b), or in the form of at least one leakproof inner skin (25) covering at least the bottom (2a) and the side walls (2b) of the respective container, and that the containers (2) are arranged in a layer or are superposed in non-nesting manner and the connections from the containers to the indicating means (8, 9) and/or to drainage ducts (4, 5) are designed to be detachable so that each individual container (2) is removable without adversely affecting functioning of the entire facility (1).

2. A waste disposal facility according to claim 1, characterised in that the monitoring means comprises a drainage layer (23, 24) provided in the container interior in the bottom region of the container.

3. A waste disposal facility according to claim 2, characterised in that the drainage layer (23, 24) is provided with a drainage duct (4) leading from this drainage layer to the outside and/or with a liquid or moisture sensor arranged in or at the drainage layer, respectively, a signalling line leading from this liquid or moisture sensor to the outside.

4. A waste disposal facility according to claim 2 or 3, characterised in that in some of the containers (2) of the facility (1) the drainage layer (24, 24a) extends upwardly along the side walls (2b) of the respective container (2).

5. A waste disposal facility according to any one of claims 2 to 4, characterised in that at least in some of the containers (2) of the facility (1), at least in the region of the container bottom (2a), a further drainage layer (28) is arranged to follow upon the drainage layer (24) and an inner skin covering the same towards the interior of the container, which further drainage layer (28) is provided with a drainage duct (29) leading to the outside.

6. A waste disposal facility according to any one of claims 1 to 5, characterised in that in at least some of the containers (2) of the facility (1), in the upper part of the containers (2), a gas outlet (31) leading to the outside is provided which preferably originates from a gas drainage (30) provided in the container (2).

7. A waste disposal facility according to any one of claims 1 to 6, characterised in that the indicator means comprises monitoring vessels (6) for collecting liquids and/or gases arriving from the interior of the container through drainage ducts, which monitoring vessels enable checking for the presence of such liquids and/or gases visually and/or by means of sensors (9) reacting to such media, and that optionally suction means are provided to aid the flow of the liquids and/or gases into the monitoring containers (6).

8. A waste disposal facility according to any one of claims 1 to 7, characterised in that at least in some of the containers (2), the monitoring means (4, 6) is equipped with sensors (9) sensing the electric resistance of a measured distance affected by liquids or moisture, respectively.

9. A waste disposal facility according to claim 7, characterised in that a tub is provided as the monitoring vessel, drainage ducts (5) from a plurality of containers (2) leading to this tub.

10. A waste disposal facility according to any one of claims 1 to 9, characterised in that for at least some of the containers (2) of the facility (1), a leakproof bottom covering (21a) is provided underneath the containers that preferably are supported on pedestals provided on the ground, which leakproof bottom covering optionally forms the bottom of a tub (22).

11. A waste disposal facility according to any one of claims 1 to 10, charaterised in that the containers (2) are cuboid transport containers of the type termed "ISO-containers" intended for transportation by road, rail and ship.

12. A waste disposal facility according to any one of claims 1 to 11, characterised in that the containers (2) are made of metal, in particular steel, and are externally provided with a jacket (34) to protect them from environmental influences, in particular moisture or the like, the jacket preferably being made of synthetic material, yet optionally also of concrete, wood or steel.

13. A waste disposal facility according to any one of claims 1 to 12, characterised in that in at least some of the containers (2) of the facility (1), separate drainage and/or degassing zones (28, 30) in direct connection with the stored waste are provided within the containers (2) and have separate drain ducts (29, 31) towards the outside, via which the waste can be dewatered and degassed, thus enabling a conditioning of the waste for its final storage.

14. A waste disposal facility according to claim 13, characterised in that filler, e.g. cement, silicone, concrete, bitumen, is present between the wastes, which filler has been introduced or pressed through the drain ducts into the drainage and degassing zones, respectively, after drainage and/or degassing has been effected.

15. A waste disposal facility according to any one of claims 1 to 14, characterised in that the transport containers (2) are free-standing.

16. A waste disposal facility according to any one of claims 1 to 14, characterised in that the containers (2) are insulated against influences from the ground (3) and are covered by soil and that drainage and monitoring ducts (4, 5) originating from the containers (2) are led out of this cover and that preferably plants are grown on the covering soil (13).

17. A waste disposal facility according to any one of claims 1 to 16, characterised in that the containers (2) are adjacently arranged in rows along travel ways (10), such as, e.g., freeways, roadways and railway tracks, and optionally partly superposed as noise control means and/or as a sight barrier or antidazzle device, respectively, and as barriers.

18. A waste disposal facility according to claim 17, characterised in that the sides of the containers (2) facing the vehicle-passed area are made to be sound-absorbing, e.g. by application of a texture or by growing plants thereon.

19. A waste disposal facility according to claim 17 or 18, characterised in that the sides of the containers (2) facing the lanes (10) are provided with guard rails.

20. A waste disposal facility according to any one of claims 16 to 19, characterised in that the containers are set up adjacently in rows and covered on one or on both sides by soil or bulk material (13, 13a, 13b), which preferably is overgrown by plants, to form a noise control dam, each one of the monitoring and drainage systems (4, 5, 6) being led to an accessible site at the outside at the basis of the dam (16).

21. A waste disposal facility according to any one of claims 1 to 16, characterised in that the containers (2) are set up to form a boundary around a bulk material dumping area (17).

22. A waste disposal facility according to any one of claims 1 to 16, characterised in that the containers (2) are adjacently arranged in rows to form walls or dams (16) used as a boundary of a contaminated area.

23. A waste disposal facility according to any one of claims 1 to 22, characterised in that on at least some of the containers (2), a weather-resistant and corrosion-resistant receptacle (32) is externally provided to receive records on the container contents and on chemical analyses of the latter.

24. A container for a waste disposal plant, which container is provided with a lining of corrosion-resistant material, characterised in that the container (2) is a transport container made of metal, preferably a so-called "ISO container", and that a monitoring means (4, 23, 24) detecting the presence of free liquid or moisture, respectively, in the container is arranged within the container (2).

25. A container according to claim 24, characterised in that the monitoring means comprises a drainage layer (23, 24) provided in the interior of the container in the bottom region of the container (2).

26. A container according to claim 24 or 25, characterised in that the container (2) is provided with a jacket (34) at its outer side to protect it from environmental influences, in particular moisture or the like, the jacket preferably being made of synthetic material, yet optionally also of concrete, wood or steel.

27. A container according to any one of claims 24 to 26, characterised in that on its outer side the container (2) is provided with a weather-resistant and corrosion-resistant receptacle (32) to receive records on the container contents.

## Revendications

1. Installation de dépôt de déchets destinée à la collecte de déchets, présentant une pluralité de conteneurs (2) de transport pourvus d'un revêtement en matériau résistant à la corrosion et un dispositif de contrôle (6) assurant la détection des rejets qui débordent à partir du bien déchargé, installation dans laquelle les conteneurs de transport sont rassemblés de façon contigüe et notamment sous forme empilée,
caractérisée en ce que, dans chacun des conteneurs (2) de transport rassemblés de façon contigüe est placé un dispositif de contrôle (4, 5, 23, 24) détectant la présence d'humidité ou de liquides libres dans le conteneur, ledit dispositif de contrôle étant en liaison avec un dispositif indicateur (9) prévu à l'extérieur,
et en ce que le revêtement du conteneur de transport est constitué en forme d'une cuve au sol (22) étanche, recouvrant le fond (2a) du conteneur (2) et une zone contigüe des parois latérales du conteneur (2b), ou en forme d'au moins un revêtement intérieur (25) étanche, recouvrant au moins le fond (2a) et les parois latérales (2b) du conteneur (2) correspondant,
et en ce que les conteneurs (2) sont disposés sur une couche ou empilés de façon non imbriquée,
et en ce que les liaisons des conteneurs au dispositif indicateur (6, 9) et/ou à des canalisations de drainage (4, 5) sont amovibles, de façon que chaque conteneur (2) puisse être séparément écarté, sans affecter la fonction du dispositif complet (2).

2. Installation de dépôt de déchets selon la revendication 1,
caractérisée en ce que le dispositif de contrôle comprend une couche de drainage (23, 24) prévue à l'intérieur du conteneur au niveau du fond du conteneur.

3. Installation de dépôt de déchets selon la revendication 2,
caractérisée en ce que la couche de drainage (23, 24) est pourvue d'une canalisation de drainage (4) conduisant vers l'extérieur de la couche de drainage et/ou d'un capteur de liquide ou d'humidité disposé dans ou contre la couche de drainage, un câble de signaux du capteur de liquide ou d'humidité conduisant vers l'extérieur.

4. Installation de dépôt de déchets selon la revendication 2 ou 3,
caractérisée en ce qu'au moins dans une partie du conteneur (2) de l'installation (1), la couche de drainage (24, 24a) est remontée le long des parois latérales (2b) du conteneur (2) correspondant.

5. Installation de dépôt de déchets selon l'une quelconque des revendications 2 à 4,
caractérisée en ce qu'au moins dans une partie du conteneur (2) de l'installation (1), une couche de drainage (28) supplémentaire est disposée au moins au niveau du fond du conteneur (2a) au dessus de la couche de drainage (24) et au dessus d'un revêtement intérieur recouvrant celle-ci jusqu'à l'intérieur du conteneur suivant, la couche de drainage supplémentaire étant pourvue d'une canalisation de drainage (29) conduisant vers l'extérieur.

6. Installation de dépôt de déchets selon l'une quelconque des revendications 1 à 5,
caractérisée en ce qu'au moins dans une partie du conteneur (2) de l'installation (1), un orifice de dégazage (31) conduisant vers l'extérieur est prévu dans la partie supérieure du conteneur (2), l'orifice de dégazage sortant de préférence d'un drainage (30) de gaz prévu dans le conteneur (2).

7. Installation de dépôt de déchets selon l'une quelconque des revendications 1 à 6,
caractérisée en ce que le dispositif indicateur présente des vases de contrôle destinés à collecter des liquides et/ou des gaz arrivant de l'intérieur du conteneur via des canalisations de drainage, les vases de contrôle permettant un contrôle de la présence de tels liquides et/ou de tels gaz sur un chemin visuel et/ou via des capteurs (9) sensibles à de tels milieux,
et en ce que, le cas échéant, des dispositifs d'aspiration sont prévus pour l'extraction des flux de liquides et/ou de gaz dans les conteneurs de contrôle (6).

8. Installation de dépôt de déchets selon l'une quelconque des revendications 1 à 7,
caractérisée en ce qu'au moins dans une partie du conteneur (2), le dispositif de contrôle (4, 6) est équipé de capteurs (9) comprenant la résistance électrique d'une veine de mesure influée par des liquides ou de l'humidité.

9. Installation de dépôt de déchets selon la revendication 7,
caractérisée en ce qu'une cuve, à laquelle des canalisations (5) de drainage d'une pluralité de conteneurs (2) conduisent, est prévue en tant que vase de contrôle.

10. Installation de dépôt de déchets selon l'une quelconque des revendications 1 à 9,
caractérisée en ce qu'au moins dans une partie du conteneur (2) de l'installation (1), un revêtement de sol (21a) est prévu sous les conteneurs, lesquels se trouvent de préférence sur des socles (21) prévus sur le sol, le revêtement de sol formant le cas échéant le fond d'une cuve (22).

11. Installation de dépôt de déchets selon l'une quelconque des revendications 1 à 10,
caractérisée en ce que les conteneurs (2) sont des conteneurs de transport parallélépipédiques du type des conteneurs "ISO", prévus pour le transport routier, par voie ferrée, par voie d'eau.

12. Installation de dépôt de déchets selon l'une quelconque des revendications 1 à 11,
caractérisée en ce que les conteneurs (2) sont en métal, notamment en acier et sont pourvus d'un revêtement (34) sur leurs parois extérieures contre l'action des influences de l'environnement, notamment humidité ou équivalent, le revêtement étant en matériau synthétique ou encore, le cas échéant en béton, en bois ou en acier.

13. Installation de dépôt de déchets selon l'une quelconque des revendications 1 à 12,
caractérisée en ce qu'au moins dans une partie du conteneur (2) de l'installation (1), des zones séparées de dessèchement et/ou de dégazage (28, 30) vers l'extérieur comprenant des branchements (29, 31) séparés sont prévues à l'intérieur des conteneurs (2), en liaison directe avec des déchets déposés, les déchets étant desséchés ou dégazés au dessus des branchements séparés, de façon à permettre un conditionnement des déchets apte à leur stockage final.

14. Installation de dépôt de déchets selon la revendication 13,
caractérisée en ce que dans les déchets, de la matière de remplissage est introduite, comme par exemple du ciment, de la silicone, du béton, du bitume, la matière de remplissage étant alimentée ou introduite par pressage à travers les branchements dans les zones d'assèchement ou de dégazage après réalisation d'un dessèchement et/ou d'un dégazage.

15. Installation de dépôt des déchets selon l'une quelconque des revendications 1 à 14,
caractérisée en ce que les conteneurs de transport (2) sont assemblés sans être liés les uns aux autres.

16. Installation de dépôt des déchets selon l'une quelconque des revendications 1 à 14,
caractérisée en ce que les conteneurs (2) sont isolés des influences en provenance du sol et recouverts de terreau,
et en ce que des canalisations de contrôle et de drainage (4, 5) sortant des conteneurs (2) sont menées hors du couvercle,
et en ce que le terreau (13) recouvrant est de préférence planté.

17. Installation de dépôt des déchets selon l'une quelconque des revendications 1 à 16,
caractérisée en ce que les conteneurs (2) sont alignés en juxtaposition et le cas échéant partiellement empilés le long de voies carrossables (10) comme par exemple les autoroutes, les voies de tramway et les voies ferrées et placés en tant que protection contre le bruit et/ou protection visuelle ou contre l'éblouissement et placés en tant que barrières.

18. Installation de dépôt de déchets selon la revendication 17,
caractérisée en ce que les côtés des conteneurs (2) tournés vers la zone de circulation sont équipés pour absorber le bruit, par exemple par l'introduction de structure ou par plantation.

19. Installation de dépôt de déchets selon la revendication 17 ou 18,
caractérisée en ce que les côtés des conteneurs (2) tournés vers les voies de circulation (10) sont pourvus de glissières de sécurité.

20. Installation de dépôt des déchets selon l'une quelconque des revendications 16 à 19,
caractérisée en ce que les conteneurs (2) sont rangés les uns contre les autres et recouverts de terreau ou de déblai (13, 13a, 13b) pour constituer un remblai de protection au bruit d'un seul côté ou des deux côtés, ledit déblai étant de préférence planté, les systèmes (4, 5, 6) de drainage et de contrôle étant conduits au pied du remblai (16) vers un endroit accessible et vers l'extérieur respectivement.

21. Installation de dépôt de déchets selon l'une quelconque des revendications 1 à 16,
caractérisée en ce que les conteneurs (2) sont placés en tant que délimiteurs d'une décharge de remblai (17).

22. Installation de dépôt des déchets selon l'une quelconque des revendications 1 à 16,
caractérisée en ce que les conteneurs (2) rangés les uns contre les autres, formant des murs ou des remblais (16) sont placés en tant que délimiteurs d'une zone contaminée.

23. Installation de dépôt des déchets selon l'une des revendications 1 à 22,
caractérisée en ce qu'au moins dans une partie des conteneurs (2), un réceptacle (32) résistant à la corrosion et au temps est prévu sur les parois extérieures de ces mêmes conteneurs pour recevoir des marquages sur le contenu des conteneurs et sur des analyses chimiques de ce même contenu.

24. Conteneur pour installation de dépôt des déchets, étant pourvu d'un revêtement constitué d'un matériel résistant à la corrosion,
caractérisé en ce que le conteneur (2) est un conteneur de transport en métal, de préférence un conteneur "ISO",
et en ce qu'un dispositif de contrôle (4, 23, 24) détectant la présence d'humidité ou de liquides libres dans le conteneur est placé dans le conteneur (2).

25. Conteneur selon la revendication 24,
caractérisé en ce que le dispositif de contrôle comprend une couche de drainage (23, 24) prévue à l'intérieur du conteneur au niveau du fond du conteneur (2).

26. Conteneur selon la revendication 24 ou 25,
caractérisé en ce que le conteneur (2) est pourvu d'un revêtement (34) sur son côté extérieur contre l'action des influences de l'environnement, notamment l'humidité ou équivalent, ledit revêtement étant de préférence en matériau synthétique, ou encore le cas échéant en béton, en bois ou en acier.

27. Conteneur selon l'une des revendications 24 à 26,
caractérisé en ce que le conteneur (2) est pourvu sur son côté extérieur d'un réceptacle (32) résistant à la corrosion et au temps et destiné à recevoir des marquages sur le contenu du conteneur.
